# EUROPEAN PATENT APPLICATION

(11) **EP 2 276 314 A1**
(43) Date of publication of application: **19.01.2011**
(21) Application number: 09009274.3
(22) Date of filing: 16.07.2009
(51) Int. Cl.: H04W 76/02, H04W 12/00, H04W 88/04, H04W 88/06

(54) **Method, system and adapter for connecting a plurality of devices**

(71) Applicant: Vodafone Holding GmbH, 40213 Düsseldorf (DE)
(72) Inventor: Koraichi, Najib, 6333 CT, Schimmert (NL); Montaner, Javier, 50008 Zaragoza (ES)
(74) Representative: Wiethoff, Stefan

(57) **Abstract**

A method for connecting a first device (100) and a second device (102) is suggested. The method comprises the steps of: (a) establishing a first connection between the first device (100) and second device (102) via a first communication channel (103); (b) exchanging configuration data between the first device (100) and the second device (102) via the first connection and (c) using the configuration data to set up a second connection between the first device (100) and the second device (102) via a second communication channel (101). The method facilitates the connection of various devices by means of a wireless network technology. Furthermore, the invention relates to a system in which the method is usable to connect two devices and an adapter module for connecting to a first device, the adapter module being usable in the method. The first device may be a mobile communication device.

## Description

### Technical Field

The present invention is related to a method for connecting devices. In particular, the present invention is related to a method for connecting a first device to a second device, to a system comprising a first device, which is connectable to a second device, and to an adapter module for connecting to first device. One of the devices connectable to each other may be a mobile communication device.

### Background of the invention

Today, there is a plurality of wireless network technologies available to connect devices. Mobile communication devices such as mobile telephones can be connected to a computer by infrared light signals according to the IrDA (Infrared Data Association) standard. This type of communication is limited to short distances and requires a line of sight between the devices. Another possibility for connecting devices is a wireless radio communication between the devices according to the Bluetooth standard. Bluetooth is an industrial specification for wireless personal area networks. However, different manufacturers of devices utilise different profiles and require a certain amount of adaptation between devices to be connected by Bluetooth radio signals. The achievable data rate with Bluetooth connections is in the range of 1 to 3 Mb per second.

Another alternative for wirelessly connecting devices by radio signals is a radio communication according to the ZigBee specification for communication protocols using small power digital radios based on the IEEE 802.15.4 standard. The main goal of ZigBee networks are general-purpose self organising mesh networks that can be used in various applications. The achievable data rates in a ZigBee network are in the range of 40 to 250 kb per second per channel. It is already known to connect mobile telephones according to the ZigBee standard. E.g. from KR 100738923 B1 it is known to add a ZigBee module and a payment module to a SIM card of a mobile phone. In this way payment and ZigBee functionality are integrated in the same device.

Today many consumers have a plurality of devices which in principal can be connected to each other by a local wireless network such as Bluetooth or a WiFi-network.

However, in practice it is frequently complex and cumbersome from an end user perspective to connect a handset such as a mobile phone to another device using a local wireless link such as Bluetooth or WiFi.

### Summary of the Invention

It is therefore desirable to support an end user in the task of connecting devices via local wireless links.

Therefore, the invention suggests a method comprising the features of claim 1, a system comprising the features of claim 9 and an adapter module comprising the features of claim 13. Embodiments of the method, the system and the adapter module are given in the dependent claims.

According to a first aspect of the invention, a method for connecting a first device and a second device is provided. The method comprises the following steps:
- establishing a first connection between the first device and the second device via a first communication channel;
- exchanging configuration data between the first device and the second device via the first connection,
- using the configuration data to set up a second connection between the first and the second device via a second communication channel.

According to a second aspect, a system is provided that comprises a first device, which is connectable to a second device. The first device comprises a first connection means for connecting the device to the second device via a first communication channel. The first connection means is configured to exchange configuration data with the second device via the first communication channel. The first device comprises a second connection means for connecting the device to the second device via second communication channel. The second connection means being configured to set up a connection to the second device via the second communication channel using the configuration data.

According to a third aspect of the invention, an adapter module for connecting to a first device is suggested. The adapter module comprises a first connection means for connecting the adapter module with a second device via a first communication channel. The first connection means is configured to exchange configuration data with the second device via the first communication channel, the configuration data being usable for setting up a connection between the first device and the second device via the second communication channel.

The first device, to which the adapter module can be connected, may comprise a second connection means for connection the first device to a second device via the second communication channel. In an alternative embodiment, the adapter module may also comprise the second connection means.

The invention facilitates the establishment of a connection between various devices via the second communication channel. By means of the adapter module, the first device can be provided with a means for establishing the connection between the devices in a simple manner.

The first connection between the first and the second device is used for exchanging configuration data for establishing the second connection, which can be used to exchange user data between the devices. Therefore, in one embodiment of the method, the system and the adapter module, the first connection is shut down, when the second connection between the first and the second device has been established. Particularly, this allows for saving energy for maintaining the first connection. Moreover, the risk is reduced that an unauthorized third party accesses one of the devices via the first communication channel.

In one embodiment of the method, the system and the adapter module, the first communication channel and/or the second communication channel comprise a wireless communication between the first and the second device. A wireless communication channel allows for connecting the devices in a way, which is very convenient for the user. Examples of wireless communication channels are Bluetooth and ZigBee. Particularly, the second communication channel may be a Bluetooth channel, which provides a relatively large bandwidth for exchanging data between the devices. In the first communication channel, a lower bandwidth may be sufficient. Therefore, the first communication channel may be a ZigBee channel, for example.

However, in wireless communication, there is a greater risk of unauthorised accesses to one of the devices. Therefore, in one embodiment of the method, the system and the adapter module, the configuration data comprises a key for setting up the second connection between the first and the second device. The key may be used for an authentication, which may be required for establishing the second connection.

The first and/or the second device may not dispose of hardware for establishing the first connection a priori. Hence, in one embodiment of the method, the system and the adapter module, the first device and/or the second device is provided with a module, the module comprising hardware for establishing a connection via the first communication channel.

In a further embodiment of the method, the system and the adapter module, the second device is connected to a communication network. Particularly, this allows for establishing a communication connection between the first device and the communication network via the second device.

In a related embodiment of the method, the system and the adapter module, a communication connection is set up between the second device and a communication device via the communication network, and data is sent from the first device to the communication device via the second device and/or data received from the communication device in the second device is forwarded from the second device to the first device.

The data exchange between the first device and the communication device may be audio data, particularly speech data, for example. In one embodiment of the method, the system and the adapter module, the first device is set in a headset mode, wherein the loudspeaker and/or a microphone of the first device are accessible by the second device via the second communication connection in the headset mode. Thus, in the headset mode the first device behaves similar to a headset connected to the second device.

In one embodiment of the methods, the system and the adapter module, the first device is a mobile communication device.

The mobile communication device may comprise a mobile terminal and a smartcard connectable to the mobile terminal. In one embodiment of the invention, the adapter module is connectable between the mobile terminal and the smartcard. Particularly, it is an advantage of this embodiment that the adapter module is able to use the existing interface of the mobile terminal for connecting the subscriber identification module to interact with the mobile terminal.

The adapter module enables the first device to connect to another device via the first communication channel. A further hardware module may be required to enable the second device to connect to another device via the first communication channel. Therefore, the invention provides a kit comprising the adapter module and a dongle connectable to the second device, the dongle comprising a third connection means for establishing a connection between the adapter module und the dongle via the first communication channel.

The aforementioned and other aspects of the invention will also be apparent from and elucidated with reference to the embodiments described hereinafter making reference to the drawings.

### Brief description of the drawings

In the accompanying drawings
- Fig. 1: is a schematic depiction of a mobile communication device connected to another device via a local wireless network;
- Fig. 2: is a schematic block diagram of a mobile communication device and
- Fig. 3: shows a schematic depiction of a mobile communication device connected to another device via a local wireless network in another embodiment.

### Detailed description of embodiments of the invention

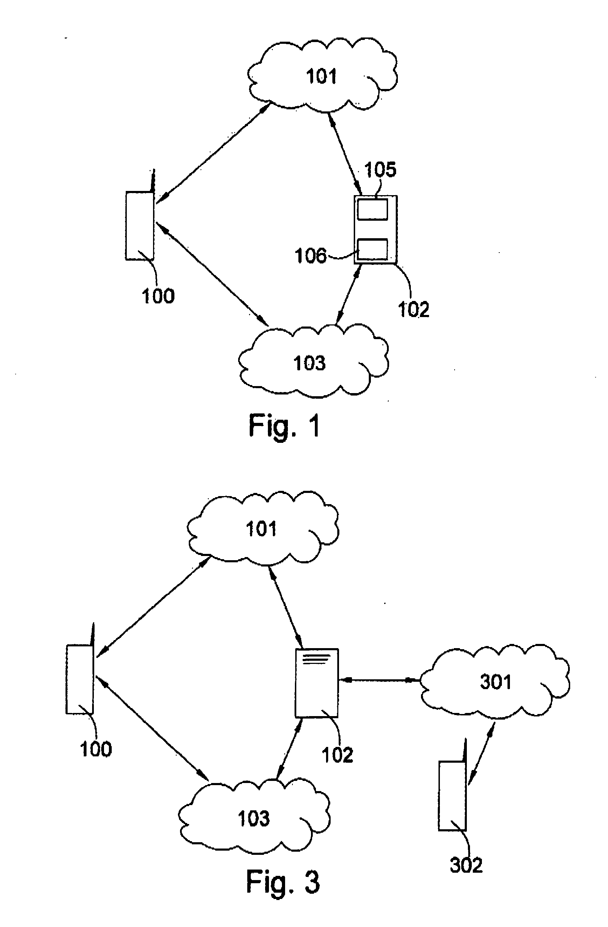

Figure 1 schematically shows a mobile communication device 100, such as, a mobile phone, a PDA or the like, which is connected to a device 102 through a local wireless communication network 101. The device 102 may be another mobile communication device or a personal computer (PC), for example. The connection via the local wireless communication network 101 allows for exchanging data be between the mobile communication device 100 and device 102. In principle, any type of data may be exchanged. Particularly, the connection via the local wireless communication network 101 may have a relatively large band with, such that a relative large amount of data can be exchanged in a short time. In one embodiment, the local wireless communication network 101 may be a Bluetooth or WiFi network.

The mobile communication device 100 and the device 102 may be the only devices connected to the local wireless communication network 101. In this case, to bidirectional connection is established between these devices. However, it is also possible, that further devices, which are not shown in figure 1, are connected to the local wireless communication network 101. In principle, the number of devices that can be connected to the network is not limited.

In addition to the connection via the local wireless communication network 101, the mobile communication device 100 and device 102 are connected to each other through a second wireless communication network 103. The second wireless communication network 103 may have a lower bandwidth than the first wireless communication network 101. In one embodiment, the second wireless communication network 103 may be configured according a radio technology for shortrange communication. Particularly, it may be a ZigBee network. The ZigBee technology is based on the IEEE 802.15.4 standard for wireless personal area networks (WPAN) and is, in principle, known to a person skilled in the art. In another embodiment, the second wireless communication network 103 may be a NFC network (NFC: Near Field Communication), for example. In principle, the NFC technology is likewise known to a skilled person.

The connection between the mobile communication device 100 and the device 102 via the second local wireless communication network 103 is used for exchanging configuration data between the two devices. The devices utilise the configuration data, for setting up of the connection via the first local wireless communication network 101. Particularly, the configuration data may comprise information that are necessary for setting up the connection via the first local wireless communication network 101, such as address information and authentication information.

After the connection via the first local wireless communication network 101 has been established data can be exchanged between the mobile communication device 100 and the device 102 using this connection. Therefore, the connection via the second local wireless communication network does not need to be active anymore and can be shut down. This means, that both connections do not need to be active at the same point in time, although both connections are depicted in figure 1. Rather, the connection via the first local wireless communication network 101 can be established after the connection via the second local wireless communication network 103 has been shut down.

For connecting the device 102 to the mobile communication device 100 through the first wireless local communication network 101, the device 102 comprises a first radio interface 105. A second radio interface 106 is provided to connect the device 102 to mobile communication device 100 via the second wireless communication network 103. Each radio interface 105, 106 comprises an antenna adapted to the employed radio technology and means for using the employed radio protocol. These means may be implemented as hardware, or they may be implemented as software, which is run on a processor of the device 102, which is not shown in figure 1.

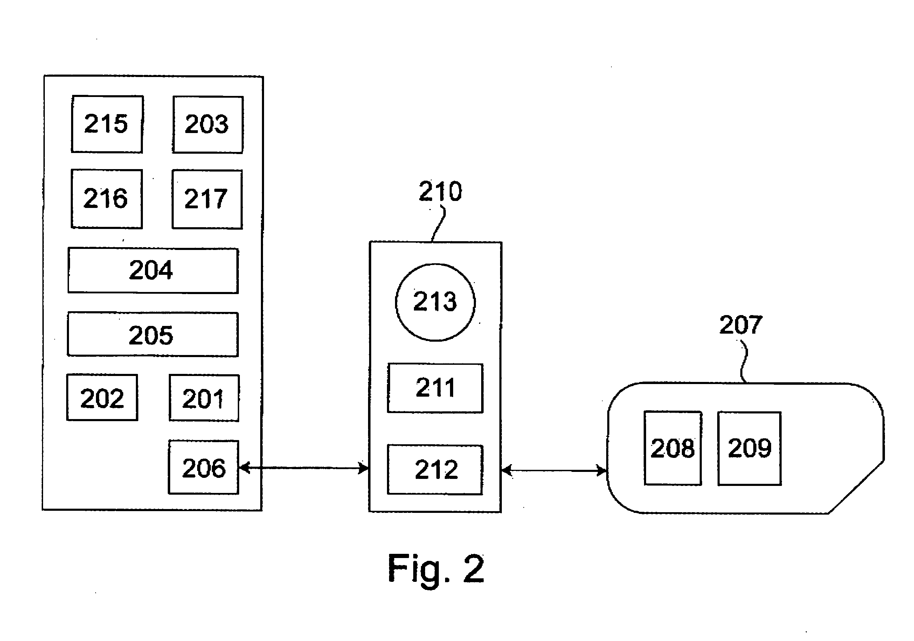

Figure 2 shows a schematic block diagram of the mobile communication device 100. The mobile communication device 100 comprises a mobile terminal 200 including a main processor 201 for controlling the operation of the mobile terminal 200. A memory unit 202 is coupled to the main processor 201 for storing data and applications that can be run on the main processor 241. Furthermore, the mobile terminal 200 comprises one or more communication interfaces. Particularly, the mobile terminal 200 provides a radio interface 203 for connecting the mobile terminal 200 wirelessly to a mobile communication network. A further wireless interface 215 is provided for connecting the mobile communication device 100 to the local wireless communication network 101.

For capturing acoustic signals, particularly for capturing speech from the user of the mobile terminal 200, the mobile terminal 200 comprises a microphone 216. For outputting acoustic signals, the mobile terminal 200 comprises a loudspeaker 217. Moreover, the mobile terminal 200 comprises a display unit 204 and an input unit 205, which can be operated by the user of the mobile communication device 100. The input unit 205 may be configured as a keypad.

By means of a card reader unit 206, the mobile terminal 200 can be connected to a subscriber identity module 207 to form the mobile communication device 100. The subscriber identity module 207 is a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the mobile user.

The subscriber identity module 207 may be configured as a subscriber identity module (SIM) according to the GSM standard or as a universal subscriber identity module (USIM) according to the UMTS standard, for example. It comprises a microprocessor 208 and a non-volatile memory 209 and stores pre-configured userrelated and network-related data, particularly data identifying the mobile user and data for authenticating the user or his mobile communication device 100 to the cellular mobile network 105. Moreover, it may store personal data of the mobile user, such as for example, contact data, notes or messages received in the mobile communication device 100.

In the present embodiment, the subscriber identity module 207 is not connected directly to the mobile terminal 200 or its card reader unit 206, but via an adapter module 210. The adapter module 210 comprises a microprocessor 211 and a memory unit 212 for storing data and applications that can be run on the microprocessor 211. When connected between the mobile terminal 200 and the subscriber identity module 207, the adapter module 210 acts as a so-called man in the middle device. Hence, communication signals between the mobile terminal 200 and the subscriber identity module 207 are exchanged via the adapter module 210 that forwards data messages from the mobile terminal 200 to the subscriber identity module 207 and vice versa.

The adapter module 210 may capable of manipulating or modifying the data exchange between the mobile terminal 200 and the subscriber identity module 207. Moreover, the adapter module 210 is capable of initiating a communication with the mobile terminal 200 and/or the subscriber identity module 207 to interact proactively with the mobile terminal 200 and with the subscriber identity module 207. For this purpose, the adapter module 210 may implement the SIM application toolkit (SAT) specified in the specification GSM 11.14 of the 3^{rd} generation project partnership (3GPP), if the subscriber identity module 207 is a SIM according to the GSM standard or the adapter module 210 may implement the USIM application toolkit (USAT) specified in the specification TS 31.111 of the 3GPP, if the subscriber identity module 207 is a USIM. The SAT, or USAT allows the subscriber identity module 207 to access functions of the mobile terminal 200 and particularly comprises so-called proactive commands by means of which the subscriber identity module 207 is able to access the functions of the mobile terminal 200 on its own initiative. By implementing the SAT or USAT in the adapter module 210, the adapter module 210 is able to access the functions of the mobile terminal 200 in the same way as the subscriber identity module 207.

The adapter module 210 also comprises a radio module 213 for connecting the adapter module 210 or the mobile communication device 101 to the second wireless communication network 103. The radio module 213 is controlled by the microprocessor 211 of the adapter module 210 and may contain a digital radio and all other necessary devices to generate radio signals according to the specification of the second local wireless communication network 103. Furthermore, it comprises an antenna to transmit radio signals to the local wireless communication network 103 and to receive radio signals from the local wireless communication network 103.

For connecting the adapter module 210 between the mobile terminal 200 and the subscriber identity module 207, the adapter module 210 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identity module 207. The electric contacts for connecting the adapter module 210 to the mobile terminal 200 and the electric contacts for connecting the adapter module 210 are connected to the microprocessor 211 of the adapter module 210.

As one of the electric contacts of the card reader unit 206 of the mobile terminal 200 acts as a power supply for the subscriber identity module 207, the adapter module 210 can also be supplied with power via this electric contact. Moreover the adapter module 210 is able to forward data received via an electric contact of the card reader to the corresponding electric contact of the subscriber identity module 207 and vice versa. The forwarded data may be modified by the microprocessor 211 of the adapter module 210 or the adapter module 210 may leave the data unmodified, thereby allowing a normal communication between the mobile terminal 200 and the subscriber identity module 207. Moreover, the proactive commands are sent from adapter module 210 to the mobile terminal 100 via the electric contact, which is provided for sending commands from the subscriber identity module 207 to the mobile terminal 210.

In one exemplary embodiment, the adapter module 210 comprises a thin contacting element, which has essentially the same shape as the subscriber identity module 207 and which can be inserted into the card receptacle of the mobile terminal 200 between the electric contacts of the card reader unit 206 and the subscriber identity module 207. On one surface, the contacting element comprises contact elements for contacting the contact elements of the subscriber identity module 207 and on the opposite surface, contact elements are arranged for contacting the contact elements of the card reader unit 206. The contact elements are connected to the microprocessor 211 of the adapter module 210. The microprocessor 211 and the memory unit 212 of the adapter module 210 may be mounted on a circuit board, which is connected to the contacting element by means of a flexible wire, thereby allowing placing the circuit board into the battery compartment of the mobile terminal 200 together with the battery. As an alternative, the microprocessor 211 and the memory unit 212 may be included in a chip that is mounted on the contacting element. In this embodiment the subscriber identity module 207 is being provided with a cutting for accepting the chip.

In another embodiment, the adapter module 210 comprises a contacting element that has essentially the same shape and thickness as the subscriber identity module 207 and that can be inserted into the card receptacle of the mobile terminal 200 to contact the contact elements of the card reader unit 206. The contacting element is connected to a circuit board via one ore more flexible wires. The microprocessor 211 and the memory unit 212 are mounted on the circuit board and in addition, the circuit board comprises a card reader unit connected to the microprocessor 211 for receiving the adapter module 210 to the subscriber identity module 207. The circuit board may be thin enough to place it into the battery compartment of the mobile terminal 200.

Using the adapter module 210 as shown in figure 2, the mobile communication device 100 can be connected to the device 102 through the second local wireless communication network 103. For establishing the connection via the second local wireless communication network 103, one of the mobile communication device 100 and the device 102 may be operated as master device while the other device is operated as slave device. Both devices 100, 102 have their radio interface 106, 213 activated. The master device scans the second local wireless communication network 103 and recognizes the slave device. For being recognizable by the master device, the slave device may identify itself by sending an identification code that is also stored in the master device. When receiving the identification code, the master device compares the received identification code with the stored identification code. If both identification codes match, the master device recognizes the slave device and sets up a connection to the slave device for exchanging configuration data, which are to be used for setting up a connection between the two devices 100, 102 via the first local wireless communication network 101.

The configuration data comprise identification information and authentication information for setting up the connection between the mobile communication device 100 and the device 101 via the first local wireless communication network 101. Moreover, the configuration data may comprise further instruction for setting up the connection, such as, for example, an instruction to use a specified radio frequency for establishing the connection.

The establishment of the connection via the first local wireless communication network 101 is also initiated by one active device 100, 102, while the other device 100, 102 is the passive device during the set up of the connection. When the connection via the second local wireless communication network 103 is established, the identification information of the passive device 100, 102 is transmitted to the active device. In one embodiment, the device 102 is the active device and hence, in this embodiment, the identification information of the mobile communication device 100 is transmitted to the device 102 via the second local wireless communication network 103. However, it is likewise possible that the mobile communication device 100 plays the active role, when setting up the connection via the local wireless communication network 101. In this case, the identification information of the device 102 is transmitted to the mobile communication device 100 or the adapter module 210 via the second local wireless communication network 103.

The authentication information should be available in both devices 100, 102 when setting up the connection via the first local wireless communication network 101. It may be configured as a key that may be a static key stored in one the devices 100, 102. Alternatively, the key is a dynamically generated in one device 100, 102 using a suitable algorithm and is only used for one establishment of a connection between the devices via the first local wireless communication network 101. In order to make the key available in both devices 100, 102, the device 100, 102, which stores or generates the key sends the key to the other device 100, 102. In one embodiment, it is the adapter module 210 of the mobile communication device 100 that stores or generates the key. In this embodiment, the adapter module 100 provides the key to the device 102 via the second local wireless communication network 101. However, in another embodiment, the device 102 stores or generates the key and the key is transmitted to the adapter module via the local wireless communication network.

When the configuration data has been exchanged between the two devices 100, 102, the active device 100, 102 initiates the establishment of the connection between the devices 100, 102 via the first local wireless communication network 101. The establishing of the connection may be done by means of applications run in the mobile communication device 104 and the device 102. In the mobile communication device 100 the application may be launched by the adapter module 210 and the adapter module may pass the configuration data that are necessary for establishing the connection to the application.

During the establishment of the connection, the active device 100, 102 requests the passive device 102 to provide the key exchanged between the devices 100, 102 before. Upon the request, the passive device 100, 102 sends the key to the active device 100, 102, and the active device 100, 102 validates the key using the version of the key stored in the active device 100, 102. After the key has been validated successfully in the active device 100, 102, the connection between the devices 100, 102 via the first local wireless communication network 101 is established and can be used to exchange data between the devices 100.

The connection between the mobile communication device 100 and the device 102 via the first local wireless communication network 101 may be used to exchange any kind of data between the devices. As an example, audio data, such as, music, or video data may be transferred from the device 102 to the mobile communication device 100, such that this data is available in the mobile communication device 100 for use.

In one embodiment, schematically depicted in figure 3, the device 102 is connected to a communication network 301. The communication network 301 may be a network based on the Internet protocol (IP) and the device 102 may be a personal computer or another device connected to the communication network in a way known to a person skilled in the art. If the device 102 is another mobile communication device, the communication network 301 may be a mobile communication network. In this embodiment, the connection between the mobile communication device 100 and the device 102 via the first local wireless communication network 101 allows for establishing the communication connection between the mobile communication device 100 and a terminating communication device 302, which is connected to the communication network 301. The communication connection is established via the device 102.

Particularly, the device 102 may establish the communication connection to the terminating communication device 302 using a communication service of the communication network 341. This communication service may be a voice over IP (VoIP) service, for example. When the communication connection between the device 102 and the terminating communication device 302 has been established, the mobile communication device 100 is set into a "headset mode". In the headset mode, audio data captured by the microphone 216 of the mobile terminal 200 is transmitted to the device 102 via the first local wireless communication network 101, and the device 102 forwards the audio data through the communication connection to the terminating communication device 302. Audio data received in the device 102 from the terminating communication device 302 are forwarded to the mobile communication device 100 via the first local wireless communication network 101, and the mobile communication device 100 outputs the received audio data by means of the loudspeaker 217 of the mobile terminal 200.

The communication connection to the terminating communication device 302 may be initiated by the mobile communication device 100. For this purpose, the user of the mobile communication device 100 enters the identification code of the terminating communication 302 device at the mobile communication device 100 using the input unit 205. The identification code may be a number or another address code of the terminating communication device 302. The identification code is transmitted to the device 102 and upon receipt of the identification code the device 102 establishes the communication connection to the terminating communication device 302 via the communication network 301. The redirection of the identification code to the device 102 is controlled by an application of the mobile communication device 100. The application may use the SAT or USAT, particularly the call control functionality of the SAT or USAT, and the application may be run in the adapter module 210. When the communication connection to the terminating communication device 302 has been established, a confirmation is sent from the device 102 to the mobile communication device 100 via the first local wireless communication network 101, and in the mobile communication device 100 the confirmation is received in the adapter module 210. Then, the adapter module 210 starts another application in the mobile terminal 200. This application puts the mobile terminal 200 in the headset mode. In one embodiment, the application may be a J2ME (Java 2 Platform, Micro Edition) MIDIet (a Java program for embedded devices), which may be launched from the adapter module 210 using the standard SIM toolkit mechanism to launch an application in the mobile terminal 200.

It is apparent from the foregoing description, that the use of the adapter module 210 particularly simplifies the establishment of a connection between the mobile communication device 100 and the device 102, if the device 102 comprises the radio interface 106 for connecting to the second wireless communication network 103. However, the device 102 may not dispose of the radio interface 106 a priori. Therefore, in one embodiment, the radio interface 106 is provided in a so-called dongle, which is connectable to the device 102. Particularly, the dongle may be a plug & play USB dongle (USB: Universal Serial Bus), for example. The dongle may be distributed in a kit together with the adapter module 201. Such a kit comprises the hardware that is necessary for connecting the mobile communication device 100 and the device 102 via the second local wireless communication network 103.

While the invention has been illustrated and described in detail in the drawings and foregoing description, such illustration and description are to be considered illustrative or exemplary and not restrictive; the invention is not limited to the disclosed embodiments. Particularly, the invention has been described with regard to the connection of two devices by wireless networks is an exemplary embodiment. However, the invention is not limited to the connection of two devices and encompasses the connection of a plurality of devices. The connection between a plurality of devices is achieved by repeating the steps which are necessary to connect two devices as often as necessary to finally connect all devices in the network.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for connecting a first device (100) and a second device (102) comprising the following steps;
- establishing a first connection between the first device (100) and the second device (102) via a first communication channel (103);
- exchanging configuration data between the first device (100) and the second device (102) via the first connection,
- using the configuration data to set up a second connection between the first device (100) and the second device (102) via a second communication channel (101).

2. Method according to claim 1, further comprising the step of shutting down the first connection, when the second connection between the first device (100) and the second device (102) has been established.

3. Method according to claim 1 or 2, wherein the first communication channel (103) and/or the second communication channel (101) is a wireless communication channel.

4. Method according to one of the preceding claims, wherein the configuration data comprises a key for setting up the second connection between the first device (100) in the second device (102).

5. Method according to one of the preceding claims, further comprising the step of providing the first device (100) and/or the second device (102) with a module (210; 106), the module (210; 106) comprising hardware for establishing a connection via the first communication channel (103).

6. Method according to one of the preceding claims, further comprising the step of connecting the second device (102) to a communication network (301).

7. Method according to one of the preceding claims, further comprising the steps of setting up a communication connection between the second device (102) and a communication device (302) via the communication network (301), and forwarding data from the first device (100) to the communication device (302) via the second device (102) and/or forwarding data received from the communication device (302) in the second device (102) from the second device (102) to the first device (100).

8. Method according to one of the preceding claims, further comprising the step of setting the first device (100) in a headset mode, wherein a loudspeaker (217) and/or a microphone (216) of the first device (100) are accessible by the second device (102) via the second communication connection in the headset mode.

9. System comprising a first device (100), which is connectable to a second device (102), wherein the first device (100) comprises a first connection means (213) for connecting the first device (100) to the second device (102) via a first communication channel (103), the first connection means (213) being configured to exchange configuration data with the second device (102) via the first communication channel (103), and wherein the first device (100) comprises a second connection means (215) for connecting the first device (100) to the second device (102) via second communication channel (101), the second connection means (215) being configured to set up a connection to the second device (102) via the second communication channel (101) using the configuration data.

10. System according to claim 9, wherein the second device (102) is connectable to a communication device (302) via a communication network (301) and wherein data is exchangeable between the first device (101) and the communication device (302) via the second device (102) using the first connection between the first device (100) and the second device (102).

11. System according to claim 10, wherein the data is acoustic data and wherein the first device (100) is operable in a headset mode, and wherein, in the headset mode, a loudspeaker (217) and/or the microphone (216) of the first device (100) is accessible by the second device (102) via the second connection.

12. System according to one of the claims 9 to 11, wherein the first device (100) is a mobile communication device.

13. Adapter module (210) for connecting to a first device (100), wherein the adapter module (210) comprises a first connection means (213) for connecting the adapter module (210) to a second device (102) via a first communication channel (103), the first connection means (213) being configured to exchange configuration data with the second device (102) via the first communication channel (103), the configuration data being usable for setting up a connection between the first device (100) and the second device (102) via the second communication channel (101).

14. Adapter module according to claim 13, wherein the first device (100) is a mobile communication device comprising a mobile terminal (200) and a smartcard (207) and wherein the adapter module (210) is connectable between the mobile terminal (200) and the smart card (207).

15. Kit comprising an adapter module (210) according to claim 13 or 14 and a dongle (106) connectable to the second device (102), the dongle comprising a connection interface for establishing a connection between the adapter module (210) und the dongle (106) via the first communication channel (103).
